# EUROPEAN PATENT SPECIFICATION

(11) **EP 2 082 815 B1**
(45) Date of publication and mention of the grant of the patent: **13.01.2016**
(21) Application number: 09151317.6
(22) Date of filing: 26.01.2009
(51) Int. Cl.: B08B 3/08, B08B 3/14, B09C 1/00

(54) **Apparatus and method**
Vorrichtung und Verfahren
Appareil et procédé

(30) Priority: 25.01.2008 GB 0801342
(43) Date of publication of application: 29.07.2009
(73) Proprietor: Stork Technical Services (RBG) Limited, Aberdeen AB21 0DP (GB)
(72) Inventor: Calderwood, James, Brechin, DD9 6YL (GB)
(74) Representative: Crosby, Wendy Agnes

(56) References cited:
- DE-A1- 4 125 891
- US-A- 4 599 117
- US-A- 4 645 608
- US-A1- 2007 205 141

## Description

The present invention provides a method and an apparatus for cleaning solids containing hydrocarbons. In particular, though not exclusively, the invention is especially suited for use in oil and gas operations such as cuttings or sand washing and cleaning.

Typically oil and gas production operations generate solid waste such as drill cuttings, sands and sludge. The waste solids are often contaminated with hydrocarbons and these hydrocarbons need to be removed from the solids before the solid waste can be reintroduced into the sea. Government permits or discharge consents are available and allow a specified maximum discharge of hydrocarbons into environment agency controlled waters. Typically, in the oil and gas industry, discharge consents permit a maximum quantity of discharged hydrocarbons over a period of time. Since the quantity of hydrocarbons returned to the sea in waste solids dumped overboard is cumulative and restricted to a maximum level, it is in the interest of an oil and gas operator to return solids to the sea containing as little hydrocarbon contamination as possible. Furthermore, current guidelines recommend that solid waste returned to the sea should contain a maximum of 1 % by weight of hydrocarbons in solid waste.

A known method of cleaning solids involves filling a vessel having a large capacity with contaminated solids and adding a cleaning fluid to the solids to the vessel to separate the hydrocarbons from the solids as, for example, disclosed in US 4645608. Currently there is no system available with the capability to remove hydrocarbons from solids predictably and repeatedly so that the level of hydrocarbon contamination of the solids is less than 1 % by weight.

According to a first aspect of the invention, there is provided a method of cleaning solids containing hydrocarbons, the method comprising the steps of:-
a) transferring solids containing hydrocarbons into a vessel;
b) subsequently measuring the amount of solids within the vessel;
c) calculating an amount of a cleaning liquid required to clean the solids within the vessel;
d) contacting the solids in the vessel with the cleaning liquid; and
e) recycling the cleaning liquid to clean the solids until the solids contain less than 1 % by weight of hydrocarbons.

The method of step a) can include creating a pressure drop in the interior of the vessel to draw solids into the vessel from a solids source. The method of step a) can include attaching a vacuum pump to the vessel and creating at least a partial vacuum in the interior of the vessel to draw into the vessel solids from the solids source.

The method of step a) can additionally or alternatively include pumping solids into the vessel from a solids source.

The method of step b) can include measuring the weight of solids added to the vessel. The method can include weighing the vessel containing the solids following step a) to calculate the weight of solids transferred to the vessel.

Alternatively, the method of step b) can include measuring the volume of solids added to the vessel.

Typically, in step c), the cleaning liquid is added to the vessel in the amount calculated to clean the amount of solids transferred to the vessel. The method according to step c) can include providing approximately two parts of the cleaning liquid by volume to one part of the solids.

The method of step c) can include calculating the amount of one or more chemicals required for cleaning the amount of solids in the vessel. The chemicals can be solvents for separating hydrocarbons attached to the solids.

The method of step d) can include injecting the cleaning liquid into the solids containing hydrocarbons. The method can include fluidizing the solids containing hydrocarbons using the cleaning liquid to maximise the contact area between the cleaning fluid and the hydrocarbons. Fluidizing the solids can be achieved by injecting the cleaning liquid through one or more spray heads arranged in a lower region of the vessel.

The method of step e) can include increasing the temperature of the cleaning liquid to enhance separation of the hydrocarbons from the solids.

The method can include collecting the cleaning liquid in a fluid collection chamber and reinjecting the cleaning liquid into the solids containing hydrocarbons.

The method can include recycling the cleaning liquid at a high flow rate, but relatively low pressure. The method can include recycling the cleaning liquid in under 5 minutes. The method can include recycling the cleaning liquid in around 2 minutes.

The method of step e) can be conducted for less than two hours.

The method of step e) can include cleaning the solids for around one hour.

The method can also include washing the solids. The solids can be washed for less than one hour. The solids can be washed using water or saline. The water or saline can be sourced from the sea or a rig/plant fire water supply.

The method can include allowing the contents of the vessel to stand for a period of time. The method can include allowing the contents of the vessel to stand for around 15 minutes.

The method of step e) can include separating the solids from the hydrocarbons. The method can include allowing the solids to settle in a lower region of the vessel.

The method can include providing a hydrocarbon collection chamber and collecting hydrocarbons in the hydrocarbon collection chamber.

The method can include dividing the vessel using a weir plate to create the hydrocarbon collection chamber within the vessel. The method can include drawing off fluid across the weir plate into the hydrocarbon collection chamber. The method can include adding a water-based fluid to increase the level of fluids in the vessel and thus raise the level of a fluid/hydrocarbon interface and drawing off hydrocarbons across the weir plate into the hydrocarbon collection chamber. The weir plate is effective in drawing off hydrocarbons, since the hydrocarbons are typically less dense than the cleaning fluid.

The method during step e) can include monitoring the level of fluid in the vessel. The method can include modifying the volume of cleaning liquid in the vessel in response to the monitored or observed level of fluids in the vessel. The method can include providing at least one viewing window in a sidewall of the vessel and visually monitoring the method steps.

During step e), the method can include venting the interior of the vessel to substantially restrict accumulation of gasses within the vessel.

After step e) the cleaned solids can be removed from the vessel and reintroduced into the sea.

The method of the invention can be used offshore to clean solid waste such as drill cuttings and sands produced from an oil and gas well.

The method has the advantage that the amount of cleaning liquid required can be accurately calculated based on the measured amount of solids transferred to the vessel. Thus, the process of cleaning the solids is very efficient as the optimum amount of cleaning liquid can be utilised in the cleaning process, which avoids wasting excess cleaning liquid and is especially cost effective where expensive solvents are used. Furthermore, relating the calculated amount of cleaning liquids to the solids transferred to the vessel enables an operator monitoring the process to determine with precision the length of time that will be required to clean the solids.

According to a second aspect of the invention there is provided an apparatus for cleaning solids containing hydrocarbons, the apparatus comprising:-
a vessel arranged to receive solids containing hydrocarbons;
a measuring device adapted to measure the amount of solids within the vessel;
the vessel comprising an inlet for delivering a controlled amount of cleaning liquid,to contact the solids within the vessel;
an outlet for removing the collected cleaning liquid from the vessel, said outlet being in fluid communication with the inlet to facilitate recycling of the cleaning liquid within the vessel.

The vessel can be manufactured from stainless steel. The vessel can be manufactured with a streamlined interior. The interior of the vessel can be machined to create a streamlined interior and/or welded regions in the interior of the vessel can be ground so they have a low surface roughness. In this way internal surfaces and weld sites can be made smooth and free from crevices.

The vessel can be less than ten feet (3.0 metres) in length. Alternatively, the vessel can be less than eight feet (2.4 metres) in length. The vessel can comprise a cylindrical portion having dished ends. The axial length of the cylindrical portion can be around 2.2 metres.

The diameter of the vessel can be less than 5 metres. The diameter of the vessel can be around five foot (1.5 metres).

The interior of the vessel can be coupled to a vacuum unit, such that a pressure differential can be created across a sidewall of the vessel. The vessel can be constructed to withstand at least a partial vacuum.

The vessel can be reinforced around its circumference in at least two areas. The vessel can be provided with at least two ribs circumscribing an exterior of the vessel.

The vessel can be provided with at least one viewing window to enable visual monitoring of the interior of the vessel. The vessel can be provided with an explosion proof light to illuminate the interior of the vessel. The viewing window can be located such that the hydrocarbon and cleaning fluid split is visible in normal use.

The measuring device can be provided to determine the weight of solids transferred to the vessel. The vessel can be supported on a weighing device. Non-fixed parts of the apparatus can be supported on resilient devices, such as bellows. This arrangement effectively facilitates accurate determination of the weight of solids added to the vessel.

Alternatively, the measuring device can be provided to measure the volume of solids transferred to the vessel.

The vessel can be provided with at least one vent to ventilate the vessel. The vessel may also be fitted with an air mover to enhance ventilation and restrict accumulation of gasses within the interior of the vessel.

The vessel can be provided with a plug connectable with a socket to electrically connect the apparatus to an external power source. The vessel can be powered by a standard offshore power supply. For example, the vessel can be powered by a 63 Amp power supply.

The apparatus can be configured to fit within a space defined by an international standards organisation (ISO) frame. The apparatus can be skid mounted. The dimensions of the skid or frame can be around 10 foot by 8 foot (3.0 by 2.4 metres).

The apparatus can have a maximum weight of between 4 to 5 tonnes when empty. The apparatus can have a maximum weight of 4.5 tonnes when empty.

The apparatus can have a maximum weight of around 10 tonnes when containing solids and cleaning fluid. The apparatus can have a maximum weight of between 8 and 9 tonnes when containing solids and cleaning fluid.

The cleaning liquid can be a water-based fluid such as water or any water based solution. The cleaning liquidcan include chemicals, such as solvents. The cleaning liquid can contain at least one chemical selected from the group consisting of: solvents; degreasers; detergents; and surfactants.

The inlet for delivering the controlled amount of cleaning liquid can comprise a series of fine spray heads. The spray heads can be arranged to fluidise the sand with the cleaning liquid.

The solids containing hydrocarbons can include drill cuttings, sands, sludge, muds, silt or other solids.

All steps and features of the first and second aspects of the invention are interchangeable where appropriate.

Embodiments of the invention will now be described with reference to the accompanying Figures, in which:-
Fig. 1 is a schematic illustration of an apparatus according to the invention;
Fig. 2 is a schematic illustration of a weigh transmitter; and
Figs. 3a and 3b are opposing side views and Figs. 3c and 3d are end and top views respectively of the apparatus of Fig 1 located within a frame.

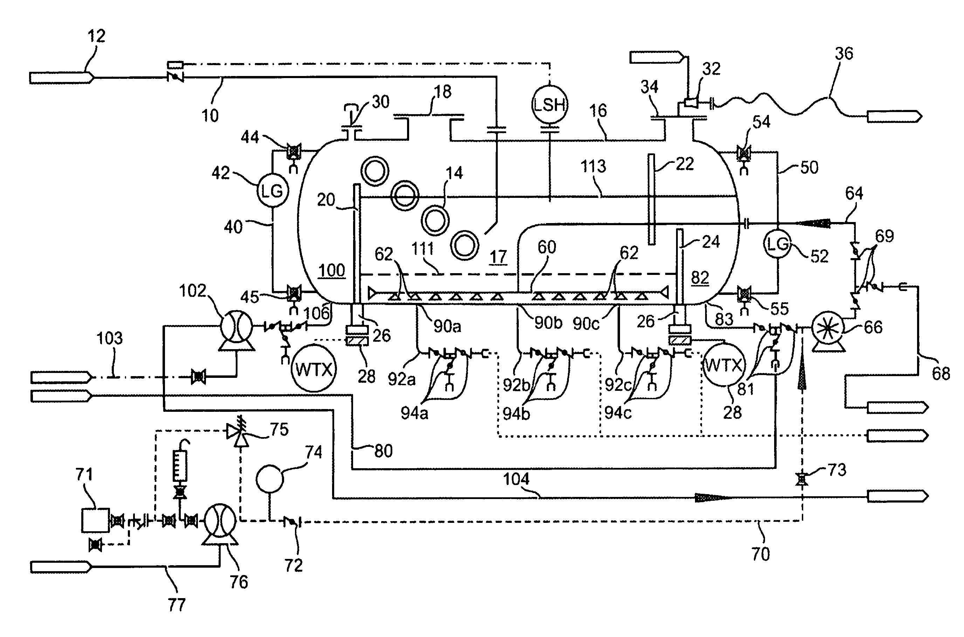

As shown in Fig. 1, the apparatus comprises an enclosed vessel 16 that is substantially cylindrical with gently rounded ends. The end to end length of the cylindrical portion of the vessel 16 is around 2.2 metres and the inner diameter of the vessel is 1.5 metres. The vessel 16 is supported by four feet 26 attached to a base of the vessel 16. The exterior of the vessel 16 is provided with a support saddle (not shown) comprising two stiffening ribs that circumscribe the vessel 16 in two axially spaced locations to provide structural reinforcement to the vessel 16. The vessel 16 is constructed with a sidewall thickness of 6mm and is rated to withstand pressure differential of 1 bar (0.1 MPa).

The vessel 16 is manufactured from stainless steel and all internal weld sites are machined or ground to ensure a low surface roughness and an internal surface that is free from all significant defects, such as crevices. Thus, the vessel has a smooth streamlined interior formed to minimise cracks and nooks on the internal surface. The streamlined interior limits the likelihood that materials will become trapped in defects such as cracks and nooks in the internal surface. This is desirable since low activity radioactive particles present in solids admitted to the vessel 16 could otherwise become trapped and create local radioactive "hot spots". Typically mild steel would be chosen to manufacture a vessel on the scale of the present apparatus, as it is significantly cheaper than stainless steel. However, stainless steel has a greater corrosion resistance than mild steel and this is especially important when the vessel is used with sands that may contain radioactive particles.

An inlet hatch or manway 18 is located on an upper surface of the vessel 16 to enable service personnel to access the interior of the vessel 16. However, the small dimensions of the vessel 16 are selected to allow remote inspection of the interior of the vessel 16 by the use of a telescopic arm. This is advantageous since remote inspection is significantly cheaper and safer than personnel accessing directly the interior of the vessel 16.

One end of a feed line 10 has an inlet in a top portion of the vessel 16. The other end of the feed line 10 is in communication with a source of solids containing hydrocarbons. Thus, the interior of the vessel is in selective communication with a source of contaminated solids via the feed line 10. According to the present embodiment, the feed line 10 is coupled to a separator (not shown) containing waste sand contaminated with oil. Separators are typically used offshore to separate out solids from hydrocarbons and water, all of which are produced from an oil and gas well. Typically, waste sands from the separator will contain around 3-15% by weight of oil contamination.

The interior of the vessel 16 is coupled to a vacuum unit (not shown). Since the vessel 16 is constructed to withstand at least partial vacuum, the vacuum unit creates a pressure drop within the interior of the vessel to draw sands into the vessel 16 by suction. The vacuum unit creates a pressure drop ahead of the sands that are then be sucked into the vessel by the pressure differential. Thus, sands are transferred in bulk along the feed line 10 into the interior of the vessel 16. Alternatively or additionally, this can be achieved by coupling a pump (not shown) to the feed line 10 and pumping sands along the feed line 10.

At one end of the top portion of the vessel 16 there is provided an air vent 30. At the opposing end of the top portion of the vessel 16 a second air vent 34 is located. The second air vent 34 is coupled to an air mover 32. Actuation of the air mover 32 promotes ventilation and substantially restricts the accumulation of gases within the interior of the vessel 16. The air mover 32 is supplied with air from an air source (not shown) from the plant or rig on which the apparatus is put to use. Air removed from the vessel 16 is transferred along air vent lines 36 for transferring air from the air mover 32 for safe disposal.

A side wall of the vessel 16 has a series of staggered transparent circular sight glasses 14 that provide views of the interior of the vessel 16 at various levels. An explosion proof light (not shown) is also fitted in an upper portion of the interior of the vessel 16. This improves visibility in the interior of the vessel 16 and enables visual monitoring of the sand cleaning process through the sight glasses 14.

The interior of the vessel 16 is provided with a weir plate 20 extending upwardly from the base and along the sides of the vessel 16 to a level approximately two thirds of the height of the vessel 16. The weir plate 20 divides the interior of the vessel 16 to define an oil collection end chamber 100. The weir plate 20 is provided to act as a weir for oil recovered from the sand since oil is less dense than cleaning fluid and will accumulate in a distinct layer above the cleaning fluid. A baffle 24 extends from the base and along the sides of the vessel 16 to a level approximately half way up the interior of the vessel 16. The baffle 24 divides the vessel 16 to define a cleaning fluid end collection chamber 82.

A second baffle 22 is attached to the sides of the vessel 16 and extends from approximately one third of the distance from the base of the vessel 16 towards the top of the vessel 16. A small gap is provided between an upper end of the second baffle 22 and the inner surface at the top of the vessel 16 to allow air flow between the air vents 30, 34. The second baffle 22 and the baffle 24 are staggered to enable water and cleaning fluids to accumulate in the cleaning fluid collection chamber 82. Oil is restricted from entering the cleaning fluid collection chamber 82 by the location of the second baffle 22 and sand is restricted from entry into the cleaning fluid collection chamber 82 by the barrier created by the baffle 24.

A central chamber 17 is defined between the weir plate 20 and the baffle 24. A high flow sparge manifold 60 extends along the base of the vessel 16 in the central chamber 17 between the weir plate 20 and the baffle 24. The high flow sparge manifold 60 has a series of sparge heads 62 that are arranged to spray cleaning fluid from the high flow sparge manifold 60. Cleaning fluid is delivered to the high flow sparge manifold 60 by a recycled fluid line 64 that is also in fluid communication with an outlet 83 from the cleaning fluid collection chamber 82.

The cleaning fluid is a mixture of water supplied by a water feed line 80 and chemicals supplied by a chemical feed line 70. The water feed line 80 is in selective fluid communication with the recycled fluid line 64. The water feed line 80 is connected to a water supply from the plant or rig on which the apparatus is put to use. Butterfly valves 81 surround the connection between the recycled fluid line 64 and the water feed line 80. The chemical feed line 70 is also in selective fluid communication with the recycled fluid line 64. A supply of chemicals 71 from an external source is pumped into the chemical feed line 70 by means of a diaphragm pump 76 supplied by an external air source 77 on the plant or rig. A pressure gauge 74 is located upstream of a non-return valve 72 on the chemical feed line 70 and a pressure return valve 75 is located between the pressure gauge 74 and the diaphragm pump 76 in order to control the supply of chemicals delivered to the recycled fluid line 64. The supply of chemicals admitted in the cleaning fluid and mixed into the recycled fluid line 64 is controlled by a ball valve 73. According to the present embodiment, the chemical solvent used for cleaning the sands has the trade name RBG-Solve and comprises R-P-Mentha-1,8-Diene (10-30%), Distillates (Petroleum), Hydrotreated, Light (70-90%), which is selected to enhance oil removal from the sands.

The process of recycling cleaning fluid from the cleaning fluid collection chamber 82 and delivering it to the high flow sparge manifold 60 is achieved by a centrifugal pump 66 located downstream of the chemical feed line 70 and upstream of a recovered fluid line 68 that allows water and cleaning fluid to be recovered from the system. Butterfly valves 69 are provided on both the recycled fluid line 64 and the recovered fluid line 68 on either side of the connection therebetween. An emergency shut down valve (not shown) is provided for the centrifugal pump 66. The cumulative area of the holes in the sparge heads 62 is slightly greater than the cross-sectional area of the recycled fluid line 64 to restrict a pressure build up behind the high-flow sparge manifold 60.

A second line 50 having a level gauge 52 is in communication with a base region and a top region of the cleaning fluid collection chamber 82. The line 50 has three way ball valves 55, 54 provided towards lower and upper ends of the line 50 respectively.

The oil collection chamber 100 has an outlet 106 leading to a recovered oil line 104. Oil is drawn out of the oil collection chamber 100 by means of a diaphragm pump driven by pumped air 103 sourced from the plant or rig. Recovered oil can be sent for further processing. The oil collection chamber 100 has a closed line 40 extending from a base region of the chamber 100 to a top region of the chamber 100. The line 40 is provided with a level gauge 42 and a base region and a top region of the line 40 are each provided with three way ball valve 45, 44 respectively. The three-way ball valves 44, 45 enable testing of the level gauge 42 to ensure correct function thereof and flushing of the line 40, should the line 40 become blocked or the level gauge 42 fails to function correctly.

The central chamber 17 has three sand outlets 90a, 90b, 90c at the base of the vessel 16. Each of the outlets 90a, 90b, 90c leads to a sand recovery line 92a, 92b, 92c. The sand recovery lines 92a, 92b, 92c are each provided with butterfly valves 94a, 94b, 94c that are shaft mounted for use as double block and bleed valves having flushing connections attached thereto. Thus, should a part of the sand recovery line 92a, 94b, 94c become obturated by sand it is possible to select valve positions to allow the line to be flushed in either the upstream or the downstream directions.

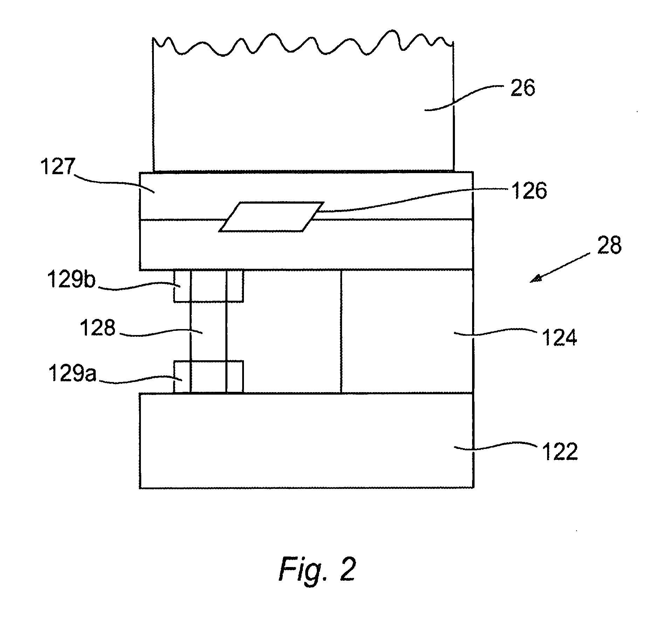

Each foot 26 of the vessel 16 stands on a weigh transmitter 28. A more detailed schematic view of the weigh transmitter 28 is shown in Fig. 2. The weigh transmitter 28 has a base 122 spaced from an upper support 127 by means of a spacer 124. The upper support 127 includes a piezo-electric crystal 126. Deformation of the piezo-electric crystal 126 is equated to the electrical resistance of the crystal to provide a value for the weight of the vessel 16 and its contents. In Fig. 2, the weigh transmitter 28 is shown in its transportation position whereby a bolt 128 extends into the upper support 127 and the base 122 and is secured by means of an upper and lower nut 129b, 129a respectively. This locks the weigh transmitter 28 for safe transportation. Before use of the equipment, the nuts 129a, 129b are loosened so that the upper support 127 is moveable relative to the base 122. Pipe work surrounding the vessel that is not fixed, such as the recycled fluid line 64, the oil recovery line 104, and the feed line 10 are supported on resilient means, such as bellows. Therefore, the vessel 16 is effectively "floating" on the weigh transmitters 28 to enable the weight of sand transferred to the vessel to be accurately determined in use.

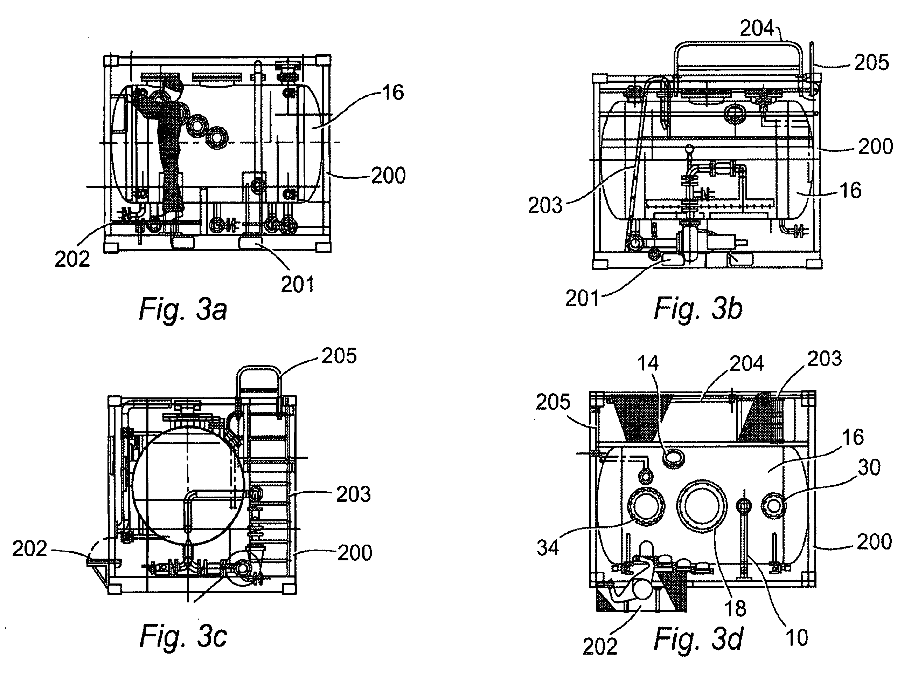

The apparatus is housed within an international standards organisation (ISO) frame 200 (shown in Figs. 3a to 3d) having a footprint of 8 foot by 10 foot (3 metres by 2.4 metres). The entire weight of the frame 200 and the apparatus, classified as the shipping weight, is less than 4.5 tonnes when the vessel 16 is empty. The frame 200 has forklift pockets 201 to facilitate movement of the apparatus on land.

The frame includes a ladder 203 extending from the base of the frame to the upper deck and a folding platform 202 to facilitate access to the vessel 16 and the sight glasses 14. The folding platform 202 is located on the opposing side of the vessel 16 from the ladder 203 and is hinged to facilitate stowing of the folding platform 202 within the profile of the frame 200 for transportation and storage. In use, the folding platform 202 extends beyond the profile of the frame 200 and is supported by a bracket therebeneath. A folding side rail 204 on the side of the vessel 16 on which the ladder 203 is located can fold from within the profile of the frame 200 and into an upright position. Similarly, a folding end rail 205 adjacent and perpendicular to the folding side rail 204 can be secured in an upright position. The folding rails 204, 205 aid personnel who require access to a top region of the vessel 16. Thus, the ladder 203, folding frame 202 and rails 204, 205 all fit within the profile of the frame 200 and are integrated in the design of the apparatus.

The apparatus is a Zone 2 ATEX complaint and category 3 gas group 2A and therefore can be used in hazardous areas such as on a plant, rig or platform offshore. The electrical components of the apparatus are powered via a single plug that is connectable to offshore power supplies. According to the present embodiment, a 63 Amp power supply is required and a normal offshore socket accepts the plug for connection to the power supply offshore so that no hard wiring of the vessel is required.

Before use, the apparatus is fitted within the external dimensions of the ISO frame 200. The apparatus can then be shipped offshore. In view of the size of the vessel 16 and the ability to weigh the contents, the maximum weight of the entire assembly in use can be limited to around 9 tonnes. Since standard deck loading offshore should be maintained below a level of 1.5 tonnes per square metre, no special deck reinforcements are required in order to accommodate the apparatus.

Prior to use, the inbuilt access ladder 203, platform 202 and rails 204, 205 are folded out and secured to minimise the additional set up requirements. The apparatus is connected to a standard offshore socket to power the apparatus. The nuts 129a, 129b on the weigh transmitter 28 are loosened so that the upper support 127 is moveable relative to the base 122 and the piezo-electric crystal 126 can function to weigh the vessel 16. Additionally, any pipes or lines not rigidly fixed are seated on bellows to enable the vessel 16 to "float" on the weigh transmitters 28.

The vacuum unit is actuated to create at least a partial vacuum in the interior of the vessel 16 to draw sands from the separator down the feed line 10 and into the interior of the vessel 16. In order to improve bulk transfer of sands, a diaphragm pump can be connected to the feed line 10 and used to pump the sand. Approximately one quarter of the tank is filled with sand up to around the level of the dashed line 111 in the chamber 17. Typically, the vessel 16 is filled such that the level of sand present in the chamber 17 is below the lowest point of the second baffle 22. The exact quantity of sand added to the vessel 16 is measured by the weigh transmitters 28. The feet 26 of the vessel 16 depress the upper support 127 and the piezo-electric crystal 126 is deformed. Deformation of the piezo-electric crystal 126 generates an electrical potential that is measured and equated to the weight of solids added to the vessel 16.

Prior to admission of the sands into the vessel 16, the hydrocarbon content present in the sand can be measured from a sample of the waste sand. Using this information and the determined weight of the sand calculated by the weigh transmitters 28, the amount of chemical solvent required to be added to water to form a cleaning fluid can be accurately calculated using oil industry approved standards. This minimises wastage of the chemical solvent and ensures optimum cleaning of the sand.

Water is supplied from the plant or rig along the water feed line 80. The amount of water supplied is roughly two parts of water by volume for every one part of sand. The water in the recycled fluid line 64 is mixed with the calculated required amount of chemical solvent from the source 71 via the chemical feed line 70. The mixture of water and chemical solvents forms the cleaning fluid that is pumped using the centrifugal pump 66 to the high flow sparge manifold 60 where it is emitted from the sparge heads 62 in fine spray jets to fluidise the sand in the base of the vessel 16. The cleaning fluid admitted to the vessel 16 reaches a level shown by continuous line 113. Cleaning fluid passes through the staggered baffles 22, 24 to enter the cleaning fluid collection chamber 82. The centrifugal pump 66 draws fluid out of the cleaning fluid collection chamber 82 via the outlet into the recycled fluid line 64 and is recirculated until it is again pumped out of the sparge heads 62 to fluidise and agitate the sand. This ensures a high degree of contact area between the cleaning fluid and the sand. This process cleans the sand and separates oils therefrom. The separated oil is less dense than the cleaning fluid in the tank and therefore the oil rises to the surface of the cleaning fluid shown by the line 113. Oil is restricted from entering the cleaning fluid collection chamber 82 by the second baffle 22. Instead, the oil drains over the weir plate 20 and collects in the oil collection chamber 100.

The cleaning fluid recycling system is a high flow rate low pressure system and fluids are fully recirculated in around two minutes. This ensures continuous agitation of the sands and good sand/cleaning fluid contact as well as efficient cleaning. As the cleaning fluid is circulated, the temperature of the fluid increases due to the friction of each repetitive cycle. This is advantageous as the solvent cleaning capability of the sands is improved at higher temperatures. To further improve this effect, a steam coil (not shown) can be used to boost the temperature of the cleaning fluid.

During the process of cleaning the sands, it is possible that gases trapped in the sands can be emitted. The air mover 32 stimulates the venting of the vessel 16 through the vents 30, 34 and thereby restricts accumulation of flammable or noxious gases such as hydrogen sulphide, H₂S.

The explosion proof light illuminates the interior of the vessel 16 and enables an observer to view the relative levels of the different components within the vessel 16 through the sight glasses 14. The cleaning fluid/oil split is visible through one of the sight glasses 14. This allows visual monitoring of the cleaning process to ensure proper functioning of the system.

The level gauge 52 allows constant monitoring of the cleaning fluid level in the chamber 82. Should the levels shown by the line 113 increase beyond an acceptable level, excess water can be recovered along the fluid recovery line 68 and removed for reuse or treatment. Typically, the dirty water is removed to a closed drain waste recovery system.

Similarly, the level gauge 42 allows the amount of oil within the oil collection chamber 100 to be monitored. As required, the diaphragm pump 102 can be used to withdraw oil from the outlet 106 and down the oil recovery line 104 where the recovered oil can be decanted and returned to the oil processing system.

The above described cleaning cycle is repeated for approximately one hour. This is followed by a wash cycle to wash the sands. Fire water from the rig or sea water is used for the washing step and is pumped either through the sparge heads 62 or directly into the vessel 16. Washing of the sand continues for around 45 minutes. During the washing cycle, the water can be recovered along the fluid recovery line 68. After the washing step, the vessel 16 is allowed to stand for 15 minutes to allow the sand to settle in the base of the vessel. Cleaned sand is then removed from the outlets 90a, 90b, 90c. The butterfly valves 94 on each outlet line 92 allow double block and bleed. Thus, if the outlet line 92a, 92b, 92c is blocked, water can be forced through the line 92a, 92b, 92c in any direction to fluidise the sands and remove the blockage.

The recovered sand is analysed and the amount of oil present in the sand is less than 1% by weight. The described process and apparatus has been shown to be successful and reduce the oil content in sand to less than 1 % by weight, even when the sand is initially contaminated with 15% oil by weight. This enables the sands to be reintroduced into the sea without risking significant contamination of the water and within acceptable government recommendations.

Once the sand cleaning process is complete, the vessel 16 can be subject to an integrity assessment using a camera on a telescopic arm. The small vessel size enables this inspection method and therefore personnel do not need to enter the interior of the vessel 16 for decontamination and integrity assessments. The overall design of the vessel 16 reduces the integrity risk and is low maintenance. The integrity risk of the vessel 16 is minimised since the interior of the vessel 16 has no moving parts. The corrosion risk is minimised by material selection and the smooth streamlined interior of the vessel 16.

The cleaning process is a batch process and although the batch size is small, the system is efficient. The fact that sand within the vessel 16 can be weighed allows an optimum quantity of chemical solvent to be used. This provides consistent and predictable results for the cleaning of the sand. Thus, the apparatus and method and of the present invention is specifically designed to clean smaller batches of solids and sands to improve control of the cleaning process and reduce overall processing time.

Modifications and improvements can be made without departing from the scope of the invention. For example, the method for cleaning sands is described above as a two hour process, although, this can be varied depending on the level of hydrocarbon contamination of the solids, the solvents used, the volume of solids in the chamber and other factors. The above described embodiment includes a solvent washing cycle and a rinse cycle. However, other stages such as additional rinses or solvent cleaning cycles can be included in the cleaning process.

The above described embodiment concerns sand washing but the method and apparatus are suitable for washing different types of solids, such as cuttings, sands, salts and mixtures thereof.

As an alternative to weigh transmitters 28, it is possible to use a capacitance method to measure the volume of solids admitted to the vessel 16. However, methods of weight measurement rather than volume measurement are preferred since the density of the contaminated solids can vary especially where there are two-phase solids present.

A centrifugal pump 66 is used to recycle the cleaning fluids in the vessel 16. The centrifugal pump 66 is especially useful as it is a robust pumping system. Although, it should be appreciated that other types of pump can be used for the same purpose.

The described embodiment uses RBG-Solve as a solvent suitable for removing oil from sand. Other chemicals used for cleaning solids that are suitable for use with the method of the invention are: AIC supplied chemicals such as chemicals with the trade names Supersolv, Rigger-1, Clearsolv and Dizzolve. Equivalent products by other manufacturers can also be used.

## Claims

1. A method of cleaning solids containing hydrocarbons, the method comprising the steps of:-
a) transferring solids containing hydrocarbons into a vessel (16);
b) subsequently measuring the amount of solids within the vessel;
c) calculating an amount of a cleaning liquid required to clean the solids within the vessel;
d) contacting the solids in the vessel with the cleaning liquid; and
e) recycling the cleaning liquid to clean the solids until the solids contain less than 1% by weight of hydrocarbons.

2. A method according to claim 1, wherein the method of step a) includes creating a pressure drop in the interior of the vessel to draw solids into the vessel from a solids source.

3. A method according to claim 2, wherein the method of step a) includes attaching a vacuum pump to the vessel and creating at least a partial vacuum in the interior of the vessel to draw into the vessel solids from the solids source.

4. A method according to any of claims 1-3, wherein the method of step a) includes pumping solids into the vessel from a solids source.

5. A method according to any preceding claim, wherein the method includes weighing the vessel containing the solids to calculate the weight of solids within the vessel.

6. A method according any of claims 1-4, wherein the method of step b) includes measuring the volume of solids within the vessel.

7. A method according to any preceding claim, wherein the method according to step c) includes providing approximately two parts of the cleaning liquid by volume to one part of the solids.

8. A method according to claim 7, wherein the method includes fluidizing the solids containing hydrocarbons using the cleaning liquid to maximise the contact area between the cleaning liquid and the hydrocarbons.

9. A method according to any of the preceding claims, wherein the method of step e) includes increasing the temperature of the cleaning liquid to enhance separation of the hydrocarbons from the solids.

10. A method according to any of the preceding claims, wherein the method includes recirculating the cleaning liquid at a high flow rate, but relatively low pressure.

11. A method according to any of the preceding claims, wherein the method also includes washing the solids.

12. A method according to any of the preceding claims, wherein the method includes allowing the contents of the vessel to stand for a period of time.

13. A method according to any preceding claim, wherein the method includes adding a water-based fluid to increase the level of fluids in the vessel and thus raise the level of a fluid/hydrocarbon interface.

14. A method according to claim 13, wherein the method includes modifying the volume of cleaning liquid in the vessel in response to the monitored or observed level of fluids in the vessel.

15. A method according to any preceding claim, wherein during step e), the method includes venting the interior of the vessel to substantially restrict accumulation of gasses within the vessel.

16. An apparatus for cleaning solids containing hydrocarbons, the apparatus comprising:-
a vessel (16) arranged to receive solids containing hydrocarbons;
a measuring device adapted to measure the amount of solids within the vessel;
the vessel comprising an inlet (18) for delivering a controlled amount of cleaning liquid,to contact the solids within the vessel;
an outlet for removing the collected cleaning liquid from the vessel, said outlet being in fluid communication with the inlet to facilitate recycling of the cleaning liquid within the vessel.

17. An apparatus according to claim 16, wherein the vessel is manufactured from stainless steel.

18. An apparatus according to claim 16 or 17, wherein the vessel has a streamlined interior.

19. An apparatus according to any of claims 16 to 18, wherein the interior of the vessel is coupled to a vacuum unit, such that a pressure differential is created across a sidewall of the vessel.

20. An apparatus according to any of claims 16 to 19, wherein the vessel is supported on a weighing device.

21. An apparatus according to any of claims 16 to 20, wherein the vessel is provided with at least one vent to ventilate the vessel.

22. An apparatus according to any of claims 16 to 21, wherein the vessel is fitted with an air mover to enhance ventilation and restrict accumulation of gasses within the interior of the vessel.

23. An apparatus according to any of claims 16 to 22, wherein the inlet for delivering the controlled amount of cleaning liquid comprises a series of fine spray heads.

## Patentansprüche

1. Ein Verfahren zum Reinigen von Kohlenwasserstoffe enthaltenden Feststoffen, wobei das Verfahren die folgenden Schritte beinhaltet:
a) Überführen von Kohlenwasserstoffe enthaltenden Feststoffen in einen Behälter (16);
b) anschließend Messen der Menge an Feststoffen innerhalb des Behälters;
c) Berechnen einer Menge einer Reinigungsflüssigkeit, die zum Reinigen der Feststoffe innerhalb des Behälters erforderlich ist;
d) In-Kontakt-Bringen der Feststoffe in dem Behälter mit der Reinigungsflüssigkeit; und
e) Rückführen der Reinigungsflüssigkeit im Kreislauf zum Reinigen der Feststoffe, bis die Feststoffe weniger als 1 Gew.-% Kohlenwasserstoffe enthalten.

2. Verfahren gemäß Anspruch 1, wobei das Verfahren aus Schritt a) das Erzeugen eines Druckabfalls in dem Innenraum des Behälters zum Ziehen von Feststoffen aus einer Feststoffquelle in den Behälter umfasst.

3. Verfahren gemäß Anspruch 2, wobei das Verfahren aus Schritt a) das Anbringen einer Vakuumpumpe an dem Behälter und das Erzeugen mindestens eines Teilvakuums in dem Innenraum des Behälters zum Ziehen von Feststoffen aus der Feststoffquelle in den Behälter umfasst.

4. Verfahren gemäß einem der Ansprüche 1-3, wobei das Verfahren aus Schritt a) das Pumpen von Feststoffen aus einer Feststoffquelle in den Behälter umfasst.

5. Verfahren gemäß einem vorhergehenden Anspruch, wobei das Verfahren das Wiegen des die Feststoffe enthaltenden Behälters zum Berechnen des Gewichts der Feststoffe in dem Behälter umfasst.

6. Verfahren gemäß einem der Ansprüche 1-4, wobei das Verfahren aus Schritt b) das Messen des Volumens der Feststoffe innerhalb des Behälters umfasst.

7. Verfahren gemäß einem vorhergehenden Anspruch, wobei das Verfahren gemäß Schritt c) das Bereitstellen von ungefähr zwei Teilen der Reinigungsflüssigkeit nach Volumen pro einem Teil der Feststoffe umfasst.

8. Verfahren gemäß Anspruch 7, wobei das Verfahren das Fluidisieren der Kohlenwasserstoffe enthaltenden Feststoffe unter Verwendung der Reinigungsflüssigkeit zum Maximieren des Kontaktbereichs zwischen der Reinigungsflüssigkeit und den Kohlenwasserstoffen umfasst.

9. Verfahren gemäß einem der vorhergehenden Ansprüche, wobei das Verfahren aus Schritt e) das Erhöhen der Temperatur der Reinigungsflüssigkeit zum Verbessern der Trennung der Kohlenwasserstoffe von den Feststoffen umfasst.

10. Verfahren gemäß einem der vorhergehenden Ansprüche, wobei das Verfahren das Umpumpen der Reinigungsflüssigkeit im Kreislauf mit einer hohen Fließgeschwindigkeit, aber relativ geringem Druck umfasst.

11. Verfahren gemäß einem der vorhergehenden Ansprüche, wobei das Verfahren auch das Waschen der Feststoffe umfasst.

12. Verfahren gemäß einem der vorhergehenden Ansprüche, wobei das Verfahren das Stehenlassen des Inhalts des Behälters über einen Zeitraum umfasst.

13. Verfahren gemäß einem vorhergehenden Anspruch, wobei das Verfahren das Hinzugeben eines Fluids auf Wasserbasis zum Erhöhen des Fluidpegel in dem Behälter und somit zum Anheben des Pegels einer Fluid/Kohlenwasserstoff-Grenzfläche umfasst.

14. Verfahren gemäß Anspruch 13, wobei das Verfahren das Modifizieren des Volumens an Reinigungsflüssigkeit in dem Behälter als Reaktion auf den überwachten oder beobachteten Fluidpegel in dem Behälter umfasst.

15. Verfahren gemäß einem vorhergehenden Anspruch, wobei das Verfahren während Schritt e) das Lüften des Innenraums des Behälters zum wesentlichen Beschränken der Anreicherung von Gasen innerhalb des Behälters umfasst.

16. Eine Einrichtung zum Reinigen von Kohlenwasserstoffe enthaltenden Feststoffen, wobei die Einrichtung Folgendes beinhaltet:
einen Behälter (16), der zum Aufnehmen von Kohlenwasserstoffe enthaltenden Feststoffen eingerichtet ist;
eine Messvorrichtung, die zum Messen der Menge an Feststoffen innerhalb des Behälters angepasst ist;
wobei der Behälter Folgendes beinhaltet: einen Einlass (18) zum Liefern einer kontrollierten Menge an Reinigungsflüssigkeit für den Kontakt mit den Feststoffen innerhalb des Behälters;
einen Auslass zum Entfernen der gesammelten Reinigungsflüssigkeit aus dem Behälter, wobei der Auslass mit dem Einlass in Fluidverbindung steht, um das Rückführen der Reinigungsflüssigkeit im Kreislauf innerhalb des Behälters zu erleichtern.

17. Einrichtung gemäß Anspruch 16, wobei der Behälter aus Edelstahl gefertigt ist.

18. Einrichtung gemäß Anspruch 16 oder 17, wobei der Behälter einen stromlinienförmigen Innenraum aufweist.

19. Einrichtung gemäß einem der Ansprüche 16 bis 18, wobei der Innenraum des Behälter an eine Vakuumeinheit gekoppelt ist, so dass über eine Seitenwand des Behälters eine Druckdifferenz erzeugt wird.

20. Einrichtung gemäß einem der Ansprüche 16 bis 19, wobei der Behälter von einer Wiegevorrichtung getragen wird.

21. Einrichtung gemäß einem der Ansprüche 16 bis 20, wobei der Behälter mit mindestens einer Lüftungsöffnung zum Lüften des Behälters versehen ist.

22. Einrichtung gemäß einem der Ansprüche 16 bis 21, wobei der Behälter mit einem Lüftungsgerät ausgestattet ist, um die Lüftung zu verbessern und die Anreicherung von Gasen innerhalb des Innenraums des Behälters zu beschränken.

23. Einrichtung gemäß einem der Ansprüche 16 bis 22, wobei der Einlass zum Liefern der kontrollierten Menge an Reinigungsflüssigkeit eine Reihe von feinen Sprühköpfen beinhaltet.

## Revendications

1. Une méthode de nettoyage de matières solides contenant des hydrocarbures, la méthode comprenant les étapes consistant :
a) à transférer des matières solides contenant des hydrocarbures dans un récipient (16) ;
b) par la suite, à mesurer la quantité de matières solides au sein du récipient ;
c) à calculer une quantité d'un liquide de nettoyage nécessaire pour nettoyer les matières solides au sein du récipient ;
d) à mettre en contact les matières solides dans le récipient avec le liquide de nettoyage ; et
e) à recycler le liquide de nettoyage pour nettoyer les matières solides jusqu'à ce que les matières solides contiennent moins de 1 % en poids d'hydrocarbures.

2. Une méthode selon la revendication 1, où la méthode de l'étape a) inclut le fait de créer une chute de pression à l'intérieur du récipient afin de tirer des matières solides dans le récipient à partir d'une source de matières solides.

3. Une méthode selon la revendication 2, où la méthode de l'étape a) inclut le fait d'attacher une pompe à vide sur le récipient et le fait de créer au moins un vide partiel à l'intérieur du récipient afin de tirer dans le récipient des matières solides à partir d'une source de matières solides.

4. Une méthode selon n'importe lesquelles des revendications 1 à 3, où la méthode de l'étape a) inclut le fait de pomper des matières solides dans le récipient à partir d'une source de matières solides.

5. Une méthode selon n'importe quelle revendication précédente, où la méthode inclut le fait de peser le récipient contenant les matières solides afin de calculer le poids de matières solides au sein du récipient.

6. Une méthode selon n'importe lesquelles des revendications 1 à 4, où la méthode de l'étape b) inclut le fait de mesurer le volume de matières solides au sein du récipient.

7. Une méthode selon n'importe quelle revendication précédente, où la méthode selon l'étape c) inclut le fait de fournir approximativement deux parties du liquide de nettoyage par volume pour une partie des matières solides.

8. Une méthode selon la revendication 7, où la méthode inclut le fait de fluidiser les matières solides contenant des hydrocarbures en utilisant le liquide de nettoyage afin de maximiser la zone de contact entre le liquide de nettoyage et les hydrocarbures.

9. Une méthode selon n'importe lesquelles des revendications précédentes, où la méthode de l'étape e) inclut le fait d'augmenter la température du liquide de nettoyage afin d'améliorer la séparation des hydrocarbures des matières solides.

10. Une méthode selon n'importe lesquelles des revendications précédentes, où la méthode inclut le fait de faire circuler à nouveau le liquide de nettoyage à un débit élevé, mais à une pression relativement basse.

11. Une méthode selon n'importe lesquelles des revendications précédentes, où la méthode inclut aussi le fait de laver les matières solides.

12. Une méthode selon n'importe lesquelles des revendications précédentes, où la méthode inclut le fait de laisser reposer le contenu du récipient pendant une période de temps.

13. Une méthode selon n'importe quelle revendication précédente, où la méthode inclut le fait d'ajouter un fluide à base d'eau afin d'augmenter le niveau de fluides dans le récipient et d'élever ainsi le niveau d'une interface fluide/hydrocarbures.

14. Une méthode selon la revendication 13, où la méthode inclut le fait de modifier le volume de liquide de nettoyage dans le récipient en réponse au niveau de fluides surveillé ou observé dans le récipient.

15. Une méthode selon n'importe quelle revendication précédente, où pendant l'étape e), la méthode inclut le fait de ventiler l'intérieur du récipient afin de restreindre substantiellement l'accumulation de gaz au sein du récipient.

16. Un appareil pour nettoyer des matières solides contenant des hydrocarbures, l'appareil comprenant :
un récipient (16) arrangé pour recevoir des matières solides contenant des hydrocarbures ;
un dispositif de mesure conçu pour mesurer la quantité de matières solides au sein du récipient ;
le récipient comprenant un orifice d'entrée (18) destiné à apporter une quantité contrôlée de liquide de nettoyage, afin qu'il entre en contact avec les matières solides au sein du récipient ;
un orifice de sortie destiné à retirer le liquide de nettoyage recueilli du récipient, ledit orifice de sortie étant en communication fluidique avec l'orifice d'entrée afin de faciliter le recyclage du liquide de nettoyage au sein du récipient.

17. Un appareil selon la revendication 16, où le récipient est fabriqué à partir d'acier inoxydable.

18. Un appareil selon la revendication 16 ou la revendication 17, où le récipient possède un intérieur profilé.

19. Un appareil selon n'importe lesquelles des revendications 16 à 18, où l'intérieur du récipient est couplé à une unité de mise sous vide, de telle sorte qu'une différence de pression est créée de part et d'autre d'une paroi latérale du récipient.

20. Un appareil selon n'importe lesquelles des revendications 16 à 19, où le récipient est supporté par un dispositif de pesage.

21. Un appareil selon n'importe lesquelles des revendications 16 à 20, où le récipient est pourvu d'au moins un évent afin de ventiler le récipient.

22. Un appareil selon n'importe lesquelles des revendications 16 à 21, où le récipient est équipé d'un déplaceur d'air afin d'améliorer la ventilation et de restreindre l'accumulation de gaz à l'intérieur du récipient.

23. Un appareil selon n'importe lesquelles des revendications 16 à 22, où l'orifice d'entrée destiné à apporter la quantité contrôlée de liquide de nettoyage comprend une série de têtes de pulvérisation fine.
